# FASCICULE DE BREVET EUROPEEN

(11) **EP 0 667 466 B1**
(45) Date de publication et mention de la délivrance du brevet: **07.01.1998**
(21) Numéro de dépôt: 95400261.4
(22) Date de dépôt: 08.02.1995
(51) Int. Cl.: F16F 1/36

(54) **Plot de suspension destiné à être interposé entre deux éléments de structure, notamment entre un bâti et une cuve de conteneur**
Aufhängungselement zur Montage zwischen zwei Konstruktionsteilen insbesondere einem Container und einer Plattform
Suspension element for mounting between two structural elements, especially between a container and a platform

(30) Priorité: 09.02.1994 FR 9401470
(43) Date de publication de la demande: 16.08.1995
(73) Titulaire: Bruas, Michel, F-75004 Paris (FR)
(72) Inventeur: Bruas, Michel, F-75004 Paris (FR); Cainaud, Henri Jean, F-21121 Fontaine Les Dijon (FR)
(74) Mandataire: Lemoine, Robert

(56) Documents cités:
- DE-A- 2 114 662
- DE-B- 1 214 479
- FR-A- 1 113 530
- GB-A- M19 531
- GB-A- 2 032 574
- US-A- 3 409 284

## Description

La présente invention concerne un plot de suspension destiné à être disposé dans une cavité ménagée par deux éléments de structure, notamment par un bâti et une cuve de conteneur, et à empêcher la transmission de vibrations et de chocs d'un élément de structure à l'autre, comportant deux surfaces d'appui parallèles, une surface latérale qui est pourvue d'une gorge annulaire équidistante des surfaces d'appui et est définie par deux troncs de cône coaxiaux et opposés, dont les petites bases sont raccordées aux surfaces d'appui et dont les grandes bases sont reliées aux flancs de la gorge annulaire, et un orifice central destiné à livrer passage à des moyens de liaison conçus pour relier les éléments de structure l'un à l'autre, l'orifice central s'étendant perpendiculairement aux surfaces d'appui.

Les plots de suspension actuels de ce type ne sont aptes à absorber que des vibrations dont les fréquences sont voisines, ce qui limite leur domaine d'utilisation.

La présente invention se propose de remédier à ce problème et, pour ce faire, elle a pour objet un plot de suspension ayant la structure indiquée ci-dessus, et qui se caractérise en ce qu'il comprend une âme formée d'un matériau rigide apte à absorber les vibrations à basse fréquence et une enveloppe formée d'un matériau apte à absorber les vibrations à haute fréquence, l'âme étant située à l'intérieur de l'enveloppe.

Ce plot peut absorber des vibrations dont les fréquences sont situées dans une plage très étendue, allant par exemple de 0 à 1 000 Hz. Il est donc capable d'amortir des chocs de nature et d'intensité très différentes, ce qui permet de l'utiliser de manière satisfaisante dans des conditions très différentes.

De préférence, l'âme comporte deux surfaces d'extrémité parallèles et adjacentes aux surfaces d'appui et un rétrécissement situé sensiblement à mi-distance de ses surfaces d'extrémité, et est pourvue de moyens assurant son ancrage à l'enveloppe.

Lorsque le plot de suspension est soumis à l'action d'une force extérieure s'exerçant au voisinage de l'une de ses surfaces d'appui, le rétrécissement de l'âme autorise un déplacement de cette surface d'appui par rapport à l'autre surface d'appui et favorise ainsi l'absorption de l'énergie reçue.

Par ailleurs, les moyens d'ancrage évitent que l'âme et l'enveloppe se déplacent l'une par rapport à l'autre sous l'action d'une force extérieure et empêchent une détérioration du plot.

Selon un mode de réalisation particulier, les moyens d'ancrage comprennent au moins une rainure annulaire ménagée dans chacune des surfaces d'extrémité de l'âme, les rainures annulaires étant remplies par le matériau constituant l'enveloppe.

En variante, les moyens d'ancrage peuvent comprendre au moins une nervure annulaire faisant saillie sur chacune des surfaces d'extrémité de l'âme, les nervures annulaires s'avançant dans le matériau constituant l'enveloppe.

Selon une autre variante, ils peuvent également comprendre des trous traversants ménagés dans l'âme, parallèlement à l'orifice central, ces trous étant équidistants angulairement les uns des autres et remplis par le matériau constituant l'enveloppe.

Avantageusement, l'âme et l'enveloppe sont formées d'élastomères aptes à reprendre leur forme initiale lorsqu'ils ne sont plus soumis à des contraintes.

Le plot de suspension selon l'invention peut ainsi conserver dans le temps ses propriétés d'amortissement et avoir une durée de vie importante.

Par ailleurs, l'âme a une dureté plus grande que celle de l'enveloppe.

Selon un mode de réalisation particulier, l'âme a une dureté de l'ordre de 90 à 99 shore A, de préférence 96 shore A tandis que l'enveloppe a une dureté de l'ordre de 60 à 80 shore A, de préférence 71 shore A.

Le plot de suspension conforme à l'invention, qui est parfaitement maintenu latéralement dans la cavité, peut se déformer librement, au niveau de la gorge annulaire de sa surface latérale, sous l'action d'une charge de compression.

Afin de faciliter sa déformation, l'orifice central peut également comporter une gorge annulaire équidistante des surfaces d'appui.

D'autre part, les troncs de cône de la surface latérale du plot de suspension peuvent être pourvus de saillies constituées par exemple par des nervures annulaires parallèles aux surfaces d'appui.

Ces saillies, qui sont conçues pour se déformer sous l'action d'une charge relativement faible, sont réparties de façon à créer une sorte de peau superficielle capable d'absorber les vibrations ayant une fréquence située dans une plage prédéterminée, par exemple allant de 20 à 1000 Hz.

Les surfaces d'appui du plot de suspension peuvent également être pourvues de saillies constituées par exemple par des nervures annulaires concentriques, ces saillies ayant la même fonction que celle des saillies ménagées sur les troncs de cône.

Trois modes d'exécution de la présente invention seront décrits ci-après à titre d'exemples nullement limitatifs en référence aux dessins annexés dans lesquels :
- la figure 1 est une vue en coupe d'un plot de suspension conforme à l'invention, interposé entre un bâti et une cuve de conteneur représentés de façon partielle ;
- la figure 2 est une vue en perspective du plot de suspension visible sur la figure 1 ;
- la figure 3 est une vue en coupe d'un plot de suspension selon une variante de réalisation ;
- la figure 4 est une vue de dessus d'un plot de suspension selon une autre variante de réalisation ; et
- la figure 5 est une vue en coupe schématique du plot visible sur la figure 4.

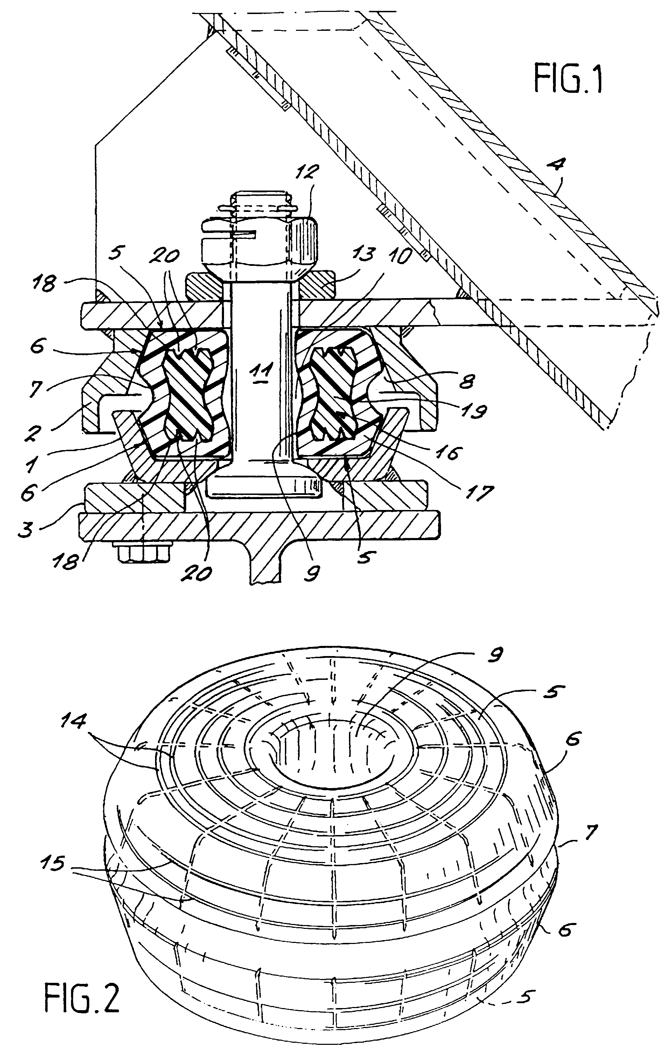

Le plot de suspension que l'on peut voir sur la figure 1 est interposé entre deux coupelles coaxiales 1 et 2 dont les entrées sont adjacentes et qui sont respectivement solidaires du bâti 3 et de la cuve 4 d'un conteneur à cuve. Il va de soi cependant que l'on ne sortirait pas du cadre de la présente invention si ce plot était utilisé dans un domaine différent de celui des conteneurs à cuve.

Le plot de suspension comprend un corps de révolution possédant deux surfaces d'appui parallèles 5 et une surface latérale comprenant deux troncs de cône coaxiaux 6 séparés l'un de l'autre par une gorge annulaire 7 équidistante des surfaces d'appui 5.

Les troncs de cône 6, qui sont identiques, sont reliés aux surfaces d'appui 5 par l'intermédiaire de leur petite base et aux flancs de la gorge annulaire 7 par l'intermédiaire de leur grande base.

Les coupelles 1 et 2 ménagent entre elles une cavité 8 avec la surface interne de laquelle les surfaces d'appui 5 et les troncs de cône 6 du plot de suspension sont en contact intime.

Le plot de suspension est pourvu d'un orifice central 9 s'étendant perpendiculairement à ses surfaces d'appui 5 et comportant une gorge annulaire 10 équidistante de ses extrémités.

L'orifice central 9 livre passage à un boulon 11 dont la tige traverse les fonds des coupelles 1 et 2, la tête de ce boulon s'appuyant contre la face extérieure du fond de la coupelle 1 tandis que son extrémité filetée reçoit un écrou 12 s'appuyant contre une rondelle 13 appliquée contre la face extérieure du fond de la coupelle 2.

Le boulon 11 et l'écrou 12 relient ainsi le bâti 3 et la cuve 4 au niveau du plot de suspension.

Les coupelles 1 et 2 maintiennent parfaitement le plot de suspension, mais ne l'empêchent pas de se déformer librement au niveau de ses gorges 7 et 10 sous l'action d'une charge de compression et par conséquent d'exercer convenablement sa fonction.

Afin de compenser des défauts de parallélisme entre les fonds des coupelles et d'équilibrer les charges exercées sur le plot de suspension, la tête du boulon 11 comporte un tronçon en forme de calotte sphérique appliqué contre un chanfrein réalisé à l'extrémité extérieure du perçage ménagé dans le fond de la coupelle 2.

En se référant plus particulièrement à la figure 2, on remarquera par ailleurs que les surfaces d'appui 5 sont pourvues de nervures annulaires concentriques 14 alors que les troncs de cône 6 sont pourvus de nervures annulaires 15 parallèles aux surfaces d'appui 5. Les nervures 14 et 15 sont destinées à se déformer sous l'action d'une force relativement faible et à former une sorte de peau superficielle permettant au plot de suspension d'absorber les vibrations ayant une fréquence située dans une plage allant par exemple de 20 à 1000 Hz lorsque ledit plot de suspension est monté sur un conteneur ayant une cuve d'environ 20 000 litres.

En revenant à la figure 1, on notera que le corps du plot de suspension comprend une âme 16 formée d'un matériau rigide apte à se déformer de façon parfaitement élastique sous l'action d'une charge de compression et à absorber les vibrations ayant une faible fréquence, par exemple de l'ordre de 0 à 20 Hz, et une enveloppe 17 renfermant l'âme 16 et formée elle-même d'un matériau ayant une faible résilience de rebondissement et une tangente delta élevée à la température ambiante et donc apte à absorber les vibrations ayant une fréquence élevée, par exemple de l'ordre de 20 à 1000 Hz.

On notera ici que les nervures 14 des surfaces d'appui 5 et les nervures 15 des trous de cône 6 font partie intégrante de l'enveloppe 17.

Les matériaux constituant l'âme 16 et l'enveloppe 17 sont de préférence des élastomères. Ils sont choisis pour leur aptitude à reprendre leur forme initiale après la suppression des contraintes exercées sur eux et ont une dureté de l'ordre de 90 à 99 shore A pour le matériau constituant l'âme et de l'ordre de 60 à 80 shore A pour le matériau constituant l'enveloppe.

En référence à la figure 1, on remarquera également que l'âme 16 présente deux surfaces d'extrémité 18 respectivement parallèles et adjacentes aux deux surfaces d'appui 5, et un rétrécissement 19 situé sensiblement à mi-distance des surfaces d'extrémité 18, le rétrécissement étant prévu pour favoriser un déplacement relatif entre les parties du plot de suspension qui sont adjacentes aux surfaces d'appui 5 lorsque l'une de celles-ci est soumise à l'action d'une force extérieure.

On précisera par ailleurs que les surfaces d'extrémité 18 de l'âme sont pourvues de rainures annulaires 20 et que le matériau constituant l'enveloppe 17 s'étend entre les rainures, ce qui augmente la solidarisation de l'âme et de l'enveloppe et évite les risques d'une séparation intempestive de celles-ci sous l'action d'une force extérieure.

La fabrication du plot de suspension conforme à l'invention ne soulève pas de problème particulier. L'âme est en effet réalisée par moulage tandis que l'enveloppe est réalisée par surmoulage.

Le matériau utilisé pour réaliser l'âme est coulé à chaud à la pression atmosphérique dans un moule approprié, puis polymérisé en étuve. Quant au matériau utilisé pour réaliser l'enveloppe, il est coulé à chaud dans un moule de surmoulage approprié contenant l'âme, puis polymérisé en étuve.

Pour être complet, on précisera que les élastomères utilisés pour constituer l'âme et l'enveloppe sont de préférence des élastomères de polyuréthane compact hautes performances. A titre d'exemple, l'âme pourrait être réalisée en un polyuréthane commercialisé sous la marque ELADIP E 167 et ayant une dureté de 96 shore A, tandis que l'enveloppe pourrait être réalisée en un polyuréthane commercialisé sous la marque ELADIP E 183 et ayant une dureté de 71 shore A.

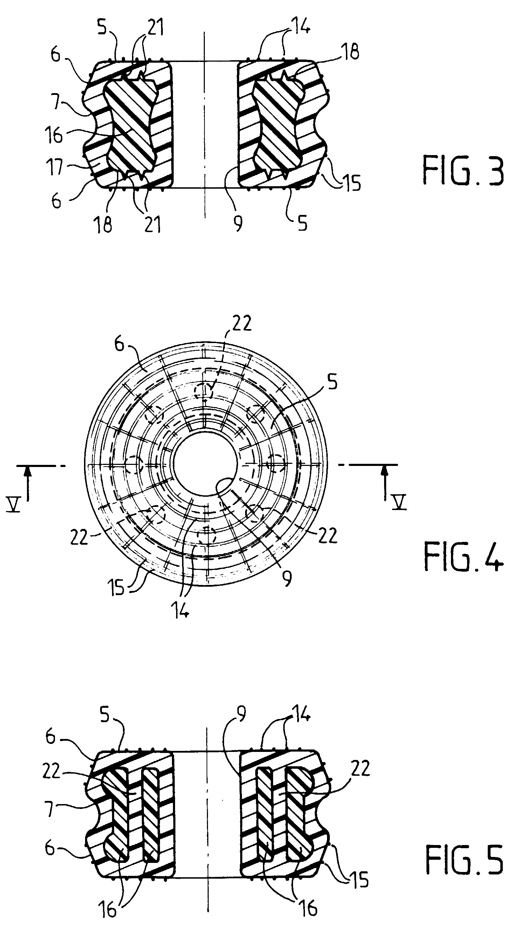

Le plot de suspension selon le mode de réalisation représenté sur la figure 3 se différencie du plot qui a été décrit en référence aux figures 1 et 2 en ce que les rainures annulaires 20 ménagées dans les surfaces d'extrémité 18 de l'âme 16 ont été remplacées par des nervures annulaires 21 faisant saillie dans le matériau constituant l'enveloppe 17.

L'âme 16 et l'enveloppe 17 ne risquent donc pas de se déplacer l'une par rapport à l'autre sous l'action d'une force extérieure.

Le plot de suspension selon le mode de réalisation représenté sur les figures 4 et 5 se différencie des plots décrits précédemment en ce que des trous traversants 22 sont ménagés dans l'âme 16 parallèlement à l'orifice central 9, ces trous étant équidistants angulairement les uns des autres et remplis par le matériau constituant l'enveloppe 7.

Grâce à la constitution interne particulière de ce plot, l'âme 16 est parfaitement solidaire de l'enveloppe 17 et ne peut donc pas se séparer accidentellement de cette dernière lorsque le plot est soumis à des chocs.

## Revendications

1. Plot de suspension destiné à être disposé dans une cavité (8) ménagée par deux éléments de structure (1,3 2,4), notamment par un bâti et une cuve de conteneur, et à empêcher la transmission de vibrations et de chocs d'un élément de structure à l'autre, comportant deux surfaces d'appui parallèles (5), une surface latérale qui est pourvue d'une gorge annulaire (7) équidistante des surfaces d'appui et est définie par deux troncs de cône (6) coaxiaux et opposés, dont les petites bases sont raccordées aux surfaces d'appui (5) et dont les grandes bases sont reliées aux flancs de la gorge annulaire (7), et un orifice central (9) destiné à livrer passage à des moyens de liaison (11, 12) conçus pour relier les éléments de structure (1,3 ; 2,4) l'un à l'autre, l'orifice central s'étendant perpendiculairement aux surfaces d'appui (5), caractérisé en ce qu'il comprend une âme (16) formée d'un matériau rigide apte à absorber les vibrations à basse fréquence et une enveloppe (17) formée d'un matériau apte à absorber les vibrations à haute fréquence, l'âme étant située à l'intérieur de l'enveloppe.

2. Plot de suspension selon la revendication 1, caractérisé en ce que l'âme (16) comporte deux surfaces d'extrémité (18) parallèles et adjacentes aux surfaces d'appui (5) et un rétrécissement (19) situé sensiblement à mi-distance de ses surfaces d'extrémité, et est pourvue de moyens (20, 21, 22) assurant son ancrage à l'enveloppe (17).

3. Plot de suspension selon la revendication 2, caractérisé en ce que les moyens d'ancrage comprennent au moins une rainure annulaire (20) ménagée dans chacune des surfaces d'extrémité (18) de l'âme (16), les rainures annulaires (20) étant remplies par le matériau constituant l'enveloppe (17).

4. Plot de suspension selon la revendication 2, caractérisé en ce que les moyens d'ancrage comprennent au moins une nervure annulaire (21) faisant saillie sur chacune des surfaces d'extrémité (18) de l'âme (16), les nervures annulaires (21) s'avançant dans le matériau constituant l'enveloppe (17).

5. Plot de suspension selon la revendication 2, caractérisé en ce que les moyens d'ancrage comprennent des trous traversants (22) ménagés dans l'âme (16), parallèlement à l'orifice central (9), ces trous étant équidistants angulairement les uns des autres et remplis par le matériau constituant l'enveloppe (17).

6. Plot de suspension selon l'une quelconque des revendications précédentes, caractérisé en ce que l'âme (16) et l'enveloppe (17) sont formées d'élastomères aptes à reprendre leur forme initiale lorsqu'ils ne sont plus soumis à des contraintes.

7. Plot de suspension selon l'une quelconque des revendications précédentes, caractérisé en ce que l'âme (16) a une dureté plus grande que celle de l'enveloppe (17).

8. Plot de suspension selon l'une quelconque des revendications précédentes, caractérisé en ce que l'âme (16) a une dureté de l'ordre de 90 à 99 shore A, de préférence 96 shore A tandis que l'enveloppe (17) a une dureté de l'ordre de 60 à 80 shore A, de préférence 71 shore A.

9. Plot de suspension selon l'une quelconque des revendications précédentes, caractérisé en ce que l'orifice central (9) comporte une gorge annulaire (10) équidistante des surfaces d'appui (5).

10. Plot de suspension selon l'une quelconque des revendications précédentes, caractérisé en ce que les troncs de cône (6) sont pourvus de saillies (15).

11. Plot de suspension selon la revendication 10, caractérisé en ce que les saillies (15) sont des nervures annulaires parallèles aux surfaces d'appui (5).

12. Plot de suspension selon l'une quelconque des revendications précédentes, caractérisé en ce que les surfaces d'appui (5) sont pourvues de saillies (14).

13. Plot de suspension selon la revendication 12, caractérisé en ce que les saillies (14) sont des nervures annulaires concentriques.

## Patentansprüche

1. Federungselement zur Anordnung in einen Hohlraum (8), der durch zwei Bauwerkteile (1, 3 ; 2, 4), insbesondere ein Gestell und eine Containerwanne, gebildet ist, und zur Verhinderung der Übertragung von Schwingungen und Stößen von einem Bauwerkteil zum anderen, bestehend aus zwei parallel verlaufenden Stützflächen (5), einer seitlichen Fläche, die mit einer zu den Stützflächen in gleichem Abstand liegenden Ringnut (7) versehen ist und durch zwei koaxial verlaufende, entgegengesetzte Kegelstümpfe (6) gebildet ist, deren kleine Grundlinien mit den Stützflächen (5), und deren große Grundlinien mit den Flanken der Ringnut (7) verbunden sind, und einer Zentralöffnung (9) zur Durchführung von Verbindungsmitteln (11, 12), die zur Verbindung der Bauwerkteile (1, 3 ; 2, 4) miteinander ausgebildet sind, wobei die Zentralöffnung senkrecht zu den Stützflächen (5) verläuft, dadurch gekennzeichnet, daß es einen Kern (16) umfaßt, der aus einem steifen, zum Aufnehmen der Schwingungen niedriger Frequenz geeigneten Werkstoff besteht, sowie eine Umhüllung (17) aus einem zum Aufnehmen der Schwingungen hoher Frequenz geeigneten Werkstoff besteht, wobei der Kern innerhalb der Umhüllung liegt.

2. Federungselement nach Anspruch 1, dadurch gekennzeichnet, daß der Kern (16) zwei parallel verlaufende, den Stützflächen (5) benachbarte Endflächen (18) aufweist, sowie eine Einschnürung (19), die im wesentlichen in halber Entfernung von seinen Endflächen liegt, und mit Mitteln (20, 21, 22) versehen ist, die seine Verankerung in die Umhüllung (17) gewährleisten.

3. Federungselement nach Anspruch 2, dadurch gekennzeichnet, daß die Verankerungsmittel aus mindestens einer Ringnut (20) bestehen, die in jeder Endfläche (18) des Kernes (16) eingearbeitet ist, wobei die Ringnuten (20) mit dem die Umhüllung (17) bildenden Werkstoff ausgefüllt sind.

4. Federungselement nach Anspruch 2, dadurch gekennzeichnet, daß die Verankerungsmittel aus mindestens einer Ringrippe (21) bestehen, die von jeder Endfläche (18) des Kernes (16) vorsteht, wobei die Ringrippen (21) in den die Umhüllung (17) bildenden Werkstoff vorspringen.

5. Federungselement nach Anspruch 2, dadurch gekennzeichnet, daß die Verankerungsmittel aus Durchbohrungen (22) bestehen, die im Kern (16), parallel zur Zentralöffnung (9), vorgesehen sind, wobei diese Durchbohrungen winkelmäßig in gleichem Abstand zueinander liegen und mit dem die Umhüllung (17) bildenden Werkstoff ausgefüllt sind.

6. Federungselement nach irgendeinem der vorangehenden Ansprüche, dadurch gekennzeichnet, daß der Kern (16) und die Umhüllung (17) aus Elastomeren bestehen, die geeignet sind, ihre Ursprungsform wieder anzunehmen, wenn sie nicht mehr beansprucht werden.

7. Federungselement nach irgendeinem der vorangehenden Ansprüche, dadurch gekennzeichnet, daß der Kern (16) eine höhere Härte als die Umhüllung (17) aufweist.

8. Federungselement nach irgendeinem der vorangehenden Ansprüche, dadurch gekennzeichnet, daß der Kern (16) eine Härte in der Größenordnung von 90 bis 99 Shore A, vorzugsweise 96 Shore A, aufweist, während die Umhüllung (17) eine Härte in der Größenordnung von 60 bis 80 Shore A, vorzugsweise 71 Shore A, aufweist.

9. Federungselement nach irgendeinem der vorangehenden Ansprüche, dadurch gekennzeichnet, daß die Zentralöffnung (9) eine zu den Stützflächen (5) in gleichem Abstand liegende Ringnut (10) aufweist.

10. Federungselement nach irgendeinem der vorangehenden Ansprüche, dadurch gekennzeichnet, daß die Kegelstümpfe (6) mit Vorsprüngen (15) versehen sind.

11. Federungselement nach Anspruch 10, dadurch gekennzeichnet, daß die Vorsprünge (15) zu den Stützflächen (5) parallel verlaufende Ringrippen sind.

12. Federungselement nach irgendeinem der vorangehenden Ansprüche, dadurch gekennzeichnet, daß die Stützflächen (5) mit Vorsprüngen (14) versehen sind.

13. Federungselement nach Anspruch 12, dadurch gekennzeichnet, daß die Vorsprünge (14) konzentrisch verlaufende Ringrippen sind.

## Claims

1. A suspension pad designed to be placed in a cavity (8) formed by two structural elements (1, 3 ; 2, 4), in particular by a frame and a container tank, and to prevent the transmission of vibrations and shocks from one structural element to the other, comprising two parallel supporting surfaces (5), a lateral surface which is provided with an annular groove (7) equidistant from the supporting surfaces and is defined by two coaxial and opposing cone trunks having small bases attached to the supporting surfaces (5) and large bases attached to the sides of the annular groove (7), and a central orifice (9) intended to permit the passage of connecting means (11, 12) designed to connect the structural elements (1, 3 ; 2, 4) to one another, the central orifice extending perpendicularly to the supporting surfaces (5), characterized in that it includes a core (16) formed of a rigid material capable of absorbing low frequency vibrations, and a shell (17) formed of a material capable of absorbing high frequency vibrations, the core being located inside the shell.

2. The suspension pad according to claim 1, characterized in that the core (16) comprises two end surfaces (18) which are parallel and adjacent to the supporting surfaces (5) and a neck (19) located substantially half way from its end surfaces, and it is provided with means (20, 21, 22) ensuring its anchoring to the shell (17).

3. The suspension pad according to claim 2, characterized in that the anchoring means include at least one annular groove (20) provided in each of the end surfaces (18) of the core (16), the annular grooves (20) being filled by the material forming the shell (17).

4. The suspension pad according to claim 2, characterized in that the anchoring means include at least one annular rib (21) projecting from each of the end surfaces (18) of the core (16), the annular ribs (21) extending into the material forming the shell (17).

5. The suspension pad according to claim 2, characterized in that the anchoring means include through holes (22) provided in the core (16), parallel to the central orifice (19), these holes being angularly equidistant to one another and filled by the material forking the shell (17).

6. The suspension pad according to any of the preceding claims, characterized in that the core (16) and the shell (17) are formed of elastomers capable of regaining their initial shape when they are no longer subjected to stress.

7. The suspension pad according to any of the preceding claims, characterized in that the core (16) is of greater hardness than that of the shell (17).

8. The suspension pad according to any of the preceding claims, characterized in that the core (16) has a Shore A hardness in the order of 90 to 99, and preferably a Shore A hardness of 96, while the envelope (17) has a Shore A hardness in the order of 60 to 80, and preferably a Shore A hardness of 71.

9. The suspension pad according to any of preceding claims, characterized in that the central orifice (9) comprises an annular groove (10) equidistant from the supporting surfaces (5).

10. The suspension pad according to any of the preceding claims, characterized in that the cone trunks (6) are provided with projections (15).

11. The suspension pad according to claim 10, characterized in that the projections (15) are annular ribs parallel to the supporting surfaces (5).

12. The suspension pad according to any of the preceding claims, characterized in that the bearing surfaces (5) are provided with projections (14).

13. The suspension pad according to claim 12, characterized in that the projections (14) are concentric annular ribs.
